# EUROPÄISCHE PATENTSCHRIFT

(11) **EP 2 791 234 B1**
(45) Veröffentlichungstag und Bekanntmachung des Hinweises auf die Patenterteilung: **06.04.2016**
(21) Anmeldenummer: 12805517.5
(22) Anmeldetag: 10.12.2012
(51) Int. Cl.: C08K 5/5313, C08L 67/02, C08L 69/00

(54) **FLAMMGESCHÜTZTE POLYALKYLENTEREPHTHALAT/POLYCARBONAT-ZUSAMMENSETZUNGEN**
FLAME-RESISTANT POLYALKYLENE TEREPHTHALATE/POLYCARBONATE COMPOSITIONS
COMPOSITIONS DE POLYALKYLÈNE TÉRÉPHTHALATE/POLYCARBONATE IGNIFUGES

(30) Priorität: 13.12.2011 EP 11193253
(43) Veröffentlichungstag der Anmeldung: 22.10.2014
(73) Patentinhaber: Covestro Deutschland AG, 51373 Leverkusen (DE)
(72) Erfinder: FELDERMANN, Achim, 40597 Düsseldorf (DE); STANGE, Berit, 51379 Opladen (DE)
(74) Vertreter: Levpat
(86) Internationale Anmeldenummer: PCT/EP2012/074988
(87) Internationale Veröffentlichungsnummer: WO 2013/087584

(56) Entgegenhaltungen:
- DE-A1-102007 061 760
- DE-A1-102010 013 991
- JP-A- 2001 335 699
- US-A1- 2007 082 995

## Beschreibung

Die vorliegende Erfindung betrifft Polyalkylenterephthalt/Polycarbonat-Zusammensetzungen, welche ein Salz einer Phosphinsäure enthalten, die Verwendung der Polyalkylenterephthalt/Polycarbonat-Zusammensetzungen zur Herstellung von Formkörpern und die Formkörper selbst.

DE-A 19904814 beschreibt thermoplastische Formmassen, enthaltend 20-98 Gew.% eines Polyesters, 1-50 Gew.% eines Polycarbonats, 1-40 Gew.% eines Phosphinsäuresalzes und/oder eines Diphosphinsäuresalzes und/oder deren Polymere, und mögliche weitere Additive.

EP 1 680 466 A1 beschreibt die Verwendung von Salzen der Hypophosphorigen Säure als Flammschutzmittel für Polycarbonatzusammensetzungen

EP 2 225 320 A1 beschreibt schlagzähmodifizierte Polyalkylenterephtalat/PolycarbonatZusammensetzungen, welche ein Salz der Phosphinsäure enthalten, wobei bei einem Gehalt der Komponente B von 20 Gew.-Teilen und mehr der Flammschutz nicht mehr den gestellten Anforderungen entspricht.

JP-A 2001-261973 (Daicel Chemical Industries Ltd.) beschreibt Zusammensetzungen aus thermoplastischen Harzen und anorganischen und/oder organischen Phosphinsäuresalzen. Als Beispiel ist eine Kombination angeführt aus 51 Gew.% PBT, 22 % Gew.-PC und 26 Gew.-% Calciumphosphinat und 0,4 Gew.% PTFE.

Der guten Wirksamkeit von organisch, aromatischen Phosphaten als Flammschutzmittel steht die stark weich machende Wirkung dieser Verbindungen auf die polymeren Bestandteile als Nachteil entgegen, so dass die Wärmeformbeständigkeit dieser Formmassen für viele Anwendungen nicht zufriedenstellend ist und andere Flammschutzmittel bevorzugt sind.

Ferner ist bekannt, daß Polyester oftmals einen unzureichenden Flammschutz aufweisen und zu einer sehr hohen Verarbeitungsschwindung neigen, was die Herstellung von Baueilen mit engen Toleranzen erschwert.

Aufgabe der vorliegenden Erfindung ist die Bereitstellung von Polyalkylenterephthalt/Polycarbonat-Zusammensetzungen mit einer optimalen Kombination aus geringer Verarbeitungsschwindung, hoher Chemikalienbeständigkeit und gute**r** Wärmeformbeständigkeit, bei gleichzeitig gutem Brandverhalten.

Es wurde nun überraschend gefunden, dass Formmassen bzw. Zusammensetzungen nach Anspruch 1 das gewünschte Eigenschaftsprofil aufweisen.

Die Erfindungsgemäßen Zusammensetzungen enthalten:
A) 49 bis 70 Gew.-Teile, vorzugsweise 51 bis 70 Gew.-Teile, weiter bevorzugt 52 bis 65 Gew.-Teile, besonders bevorzugt 53 bis 61 Gew.-Teile, aromatisches Polycarbonat,
B) 21 bis 40 Gew.-Teile, vorzugsweise 21 bis 35 Gew.-Teile, besonders bevorzugt 25 bis 33 Gew.-Teile, Polyalkylenterephthalat mit mehr als 2 Kohlenstoffen in der Diolkomponente,
C) 6 bis 25 Gew.-Teile, bevorzugt 7 bis 22 Gew.-Teile, weiter bevorzugt 10 bis 20 Gew.-Teile, besonders bevorzugt 13 - 20 Gew.-Teile, eines Salzes einer Phosphinsäure,
D) 0 bis 50 Gew.-Teile, bevorzugt 0 - 24 Gew.-Teile, weiter bevorzugt 0,5 bis 25 Gew.-Teile, noch weiter bevorzugt 1,0 bis 5,0 Gew.-Teile, übliche Additive,
wobei alle Gewichtsteilangaben in der vorliegenden Anmeldung so normiert sind, dass die Summe der Gewichtsteile der Komponenten A+B+C+D in der Zusammensetzung 100 ergibt.

Der Quotient von Komponente A) zu B) ist vorzugsweise im Bereich von 1,4 bis 3,5, weiter bevorzugt von 1,5 bis 3,0 und besonders bevorzugt von 1,6 bis 2,7.

Die erfindungsgemäßen Zusammensetzungen enthalten vorzugsweise keine kautschukbasierten Pfropfpolymere (z.B. ABS / Acrylnitrilbutadienstryrol) und auch keine kautschukfreien Vinyl(Co)polymerisate (z.B. SAN / Styrolacrylnitril).

In einer bevorzugten Ausführungsform besteht die Zusammensetzung nur aus den Komponenten A) bis D).

### Komponente A

Aromatische Polycarbonate im Sinne der vorliegenden erfindung umfassen aromatischen Polycarbonate und aromatische Polyestercarbonate.

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 007 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I) 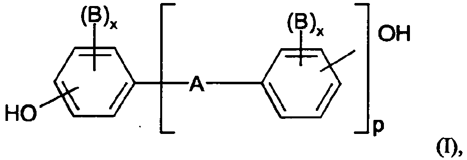 wobei
A eine Einfachbindung, C₁ bis C₅-Alkylen, C₂ bis C₅-Alkyliden, C₅ bis C₆-Cycloalkyliden,-O-, -SO-, -CO-, -S-, -SO₂-, C₆ bis C₁₂-Arylen, an das weitere aromatische gegebenenfalls Heteroatome enthaltende Ringe kondensiert sein können,
   oder ein Rest der Formel (II) oder (III) 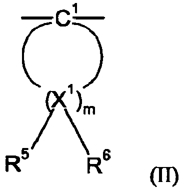 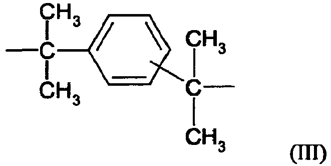
B jeweils C₁ bis C₁₂-Alkyl, vorzugsweise Methyl, Halogen, vorzugsweise Chlor und/oder Brom
x jeweils unabhängig voneinander 0, 1 oder 2,
p 1 oder 0 sind, und
R⁵ und R⁶ für jedes X¹ individuell wählbar, unabhängig voneinander Wasserstoff oder C₁ bis C₆-Alkyl, vorzugsweise Wasserstoff, Methyl oder Ethyl,
X¹ Kohlenstoff und
m eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxy-phenyl)-sulfoxide, Bis-(hydroxyphenyl)-ketone, Bis-(hydroxyphenyl)-sulfone und α,α-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxy-phenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen Polycarbonate haben mittlere Gewichtsmittelmolekulargewichte (M_{w}, gemessen durch GPC (Gelpermeationschromatographie mit Polycarbonatstandard) von 10.000 bis 200.000 g/mol, vorzugsweise 15.000 bis 80.000 g/mol, besonders bevorzugt 24.000 bis 36.000 g/mol.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen. Bevorzugt werden lineare Polycarbonate, weiter bevorzugt auf Basis von Bisphenol-A, eingesetzt.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Ebenfalls geeignet sind Polydiorganosiloxanhaltige Copolycarbonate; die Herstellung der Polydiorganosiloxanhaltiger Copolycarbonate ist beispielsweise in der DE-A 3 334 782 beschrieben.

Bevorzugte Polycarbonate sind neben den Bisphenol-A-Homopolycarbonaten die Copolycarbonate von Bisphenol-A mit bis zu 15 Mol%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Bei der Herstellung von aromatischen Polyestercarbonaten kann zusätzlich eine oder mehrere aromatische Hydroxycarbonsäure eingesetzt werden.

Die aromatischen Polyestercarbonate können sowohl linear als auch in bekannter Weise verzweigt sein (siehe dazu DE-A 2 940 024 und DE-A 3 007 934), wobei lineare Polyestercabonate bevorzugt sind.

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenon-tetracarbonsäuretetrachlorid, 1,4,5,8-Napthalintetracarbon-säuretetrachlorid oder Pyromellithsäuretetrachlorid, in Mengen von 0,01 bis 1,0 Mol% (bezogen auf eingesetzte Dicarbonsäuredichloride) oder drei- oder mehrfunktionelle Phenole, wie Phloroglucin, 4,6-Dimethyl-2,4,6-tri-(4-hydroxyphenyl)-hept-2-en, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt werden; Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die thermoplastischen, aromatischen Polycarbonate und Polyestercarbonate können allein oder im beliebigen Gemisch eingesetzt werden.

### Komponente B

Als Komponente B) enthalten die Zusammensetzungen erfindungsgemäß ein oder eine Mischung aus zwei oder mehr unterschiedlichen Polyalkylenterephthalaten.

Polyalkylenterephthalate im Sinne der Erfindung sind Polyalkylenterephthalate, die sich von Terephthalsäure (oder ihren reaktionsfähigen Derivaten, z.B. Dimethylestern oder Anhydriden) und Alkandiolen, cycloaliphatischen oder araliphatischen Diolen und Mischungen daraus, beispielsweise auf Basis von Propylenglycol, Butandiol, Pentandiol, Hexandiol, 1,2-Cyclohexandiol, 1,4-Cyclohexandiol, 1,3-Cyclohexandiol, und Cyclohexyldimethanol, ableiten, wobei die erfindungsgemäße Diolkomponente mehr als 2 Kohlenstoffatome aufweist. Demgemäß werden als Komponente B) bevorzugt Polybutylenterephthalat und/oder Polytrimethylenterephthalat, am meisten bevorzugt Polybutylenterephthalat eingesetzt.

Die erfindungsgemäßen Polyalkylenterephthalate können als Monomer der Disäure auch bis zu 5 Gew.-% Isophthalsäure enthalten.

Bevorzugte Polyalkylenterephthalate lassen sich aus Terephthalsäure (oder ihren reaktionsfähigen Derivaten) und aliphatischen oder cycloaliphatischen Diolen mit 3 bis 21 C-Atomen nach bekannten Methoden herstellen (Kunststoff-Handbuch, Bd. VIII, S. 695 FF, Karl-Hanser-Verlag, München 1973).

Bevorzugte Polyalkylenterephthalate enthalten mindestens 80, vorzugsweise mindestens 90 Mol.-%, bezogen auf die Diolkomponente, Propandiol-1,3- und/oder Butandiol-1,4-reste.

Die bevorzugten Polyalkylenterephthalate können neben Terephthalsäureresten bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure, Cyclohexandicarbonsäure.

Die bevorzugten Polyalkylenterephthalate können neben Propandiol-1,3- bzw. Butandiol-1,4-resten bis zu 20 Mol.% anderer aliphatischer Diole mit 3 bis 12 C-Atomen oder cycloaliphatischer Diole mit 6 bis 21 C-Atomen enthalten, z.B. Reste von 1,3-Propandiol, 2-Ethylpropan-1,3-diol, Neopentylglykol, 1,5-Pentan-diol, 1,6-Hexandiol, Cyclohexan-1,4-dimethanol, 3-Methylpentan-2,4-diol, 2-Methylpentan-2,4-diol, 2,2,4-Trimethylpentan-1,3-diol und 2-Ethylhexan-1,6-diol, 2,2-Diethylpropan-1,3-diol, 2,5-Hexandiol, 1,4-Di-(ß-hydroxyethoxy)-benzol, 2,2-Bis-(4-hydroxycyclohexyl)-propan, 2,4-Dihydroxy-1,1,3,3-tetramethyl-cyclobutan, 2,2-bis-(3-ß-hydroxy-ethoxyphenyl)-propan und 2,2-bis-(4-hydroxypropoxyphenyl)-propan (DE-A 24 07 674, 24 07 776, 27 15 932).

Die Polyalkylenterephthalate können durch Einbau relativ kleiner Mengen 3- oder 4-wertiger Alkohole oder 3- oder 4-basischer Carbonsäure, wie sie z.B. in der DE-A 19 00 270 und der US-A 3 692 744 beschrieben sind, verzweigt werden. Beispiele für bevorzugte Verzweigungsmittel sind Trimesinsäure, Trimellitsäure, Trimethylolethan und -propan und Pentaerythrit.

Es ist ratsam, nicht mehr als 1 Mol.% des Verzweigungsmittels, bezogen auf die Säurekomponente, zu verwenden.

Besonders bevorzugt sind Polyalkylenterephthalate, die allein aus Terephthalsäure oder deren reaktionsfähigen Derivaten (z.B. deren Dialkylestern wie Dimethylterephthalat) und Propandiol-1,3 und/oder Butandiol-1,4 hergestellt worden sind (Polypropylen- und Polybutylenterephthalat), und Mischungen dieser Polyalkylenterephthalate.

Bevorzugte Polyalkylenterephthalate sind auch Copolyester, die aus mindestens zwei der obengenannten Säurekomponenten und/oder aus mindestens zwei der obengenannten Alkoholkomponenten hergestellt sind, besonders bevorzugte Copolyester sind Poly-(propylenglykol-1,3/butandiol-1,4)-terephthalate.

Die Polyalkylenterephthalate besitzen im Allgemeinen eine intrinsische Viskosität von ca. 0,4 bis 1,5 dl/g, vorzugsweise 0,5 bis 1,3 dl/g, jeweils gemessen in Phenol/o-Dichlorbenzol (1:1 Gew.-Teile) bei 25°C.

In einer alternativen Ausführungsform können die erfindungsgemäß hergestellten Polyester auch im Gemisch mit anderen Polyestern und/oder weiteren Polymeren eingesetzt werden, wobei hier bevorzugt Gemische von Polyalkylenterephthalaten mit anderen Polyestern eingesetzt werden.

Den Polyestern können übliche Additive wie z.B. Entformungsmittel, Stabilisatoren und/oder Fließmittel in der Schmelze zugemischt oder auf der Oberfläche aufgebracht werden.

### Komponente C

Unter dem Salz einer Phosphinsäure (Komponente C) im erfindungsgemäßen Sinne sind das Salz einer Phosphinsäure mit einem beliebigen Metallkation zu verstehen. Es können auch Mischungen von Salzen eingesetzt werden, die sich in Ihrem Metallkation unterscheiden. Bei den Metallkationen handelt es sich um die Kationen Metalle der 1. Hauptgruppe (Alkalimetalle, vorzugsweise Li⁺, Na⁺, K⁺), der 2. Hauptgruppe (Erdalkalimetalle; vorzugsweise Mg²⁺, Ca²⁺, Sr²⁺, Ba²⁺, besonders bevorzugt Ca²⁺) oder der 3. Hauptgruppe (Elemente der Borgruppe; vorzugsweise Al³⁺) und/oder der 2., 7. oder 8. Nebengruppe (vorzugsweise Zn²⁺, Mn²⁺, Fe²⁺, Fe⁺) des Periodensystems ist.

Vorzugsweise wird ein Salz oder eine Mischung von Salzen einer Phosphinsäure der Formel (IV) eingesetzt, 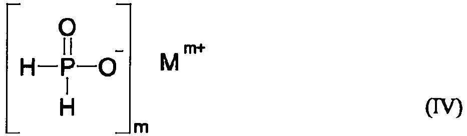 worin M^{m+} ein Metallkation der 1. Hauptgruppe (Alkalimetalle; m = 1), 2. Hauptgruppe (Erdalkalimetalle; m = 2) oder der 3. Hauptgruppe (m = 3) oder der 2., 7. oder 8. Nebengruppe (wobei m eine ganze Zahl von 1 bis 6, bevorzugt 1 bis 3 und besonders bevorzugt 2 oder 3 bedeutet) des Periodensystems ist.

Besonders bevorzugt sind in Formel (IV)
für m = 1 die Metallkationen M⁺ = Li⁺, Na⁺, K⁺,
für m = 2 die Metallkationen M²⁺ = Mg²⁺, Ca²⁺, Sr²⁺, Ba²⁺ und
für m = 3 die Metallkationen M³⁺ = Al³⁺,
höchst bevorzugt ist Ca²⁺ (m = 2).

In einer bevorzugten Ausführungsform ist die mittlere Teilchengröße d50 des Phosphinsäuresalzes (Komponente C) kleiner als 80 □m, vorzugsweise kleiner als 60 µm, besonders bevorzugt ist d50 zwischen 10 µm und 55 µm. Die mittlere Teilchengröße d50 ist der Durchmesser, oberhalb und unterhalb dessen jeweils 50 Gew.-% der Teilchen liegen. Es können auch Mischungen von Salzen eingesetzt werden, die sich in ihrer mittleren Teilchengröße d50 unterscheiden.

Diese Anforderungen an die Teilchengröße d₅₀ des Phosphinsäuresalzes sind jeweils mit dem technischen Effekt verbunden, dass die Flammschutzeffizienz des Phosphinsäuresalzes erhöht ist.

Das Phosphinsäuresalz kann entweder alleine oder in Kombination mit anderen phosphorhaltigen Flammschutzmitteln eingesetzt werden. Vorzugsweise sind die erfindungsgemäßen Zusammensetzungen frei von phosphorhaltigen Flammschutzmitteln ausgewählt aus den Gruppe der Mono- und oligomeren Phosphor- und Phosphonsäureester, Phosphonatamine und Phosphazene. Diese anderen phosphorhaltigen Flammschutzmitteln wie beispielsweise die Mono- und oligomeren Phosphor- und Phosphonsäureester besitzen gegenüber den Phosphinsäuresalzen den Nachteil, dass diese die Wärmeformbeständigkeit der Formmassen herabsetzen.

### Komponente D

Die Zusammensetzung kann weitere handelsübliche Zusatzstoffe gemäß Komponente D) wie Flammschutzsynergisten, Antidrippingmittel (beispielsweise Verbindungen der Substanzklassen der fluorierten Polyolefine wie PTFE (Poyltetrafluorethylen), der Silikone sowie Aramidfasern), Gleit- und Entformungsmittel (beispielsweise Pentaerythrittetrastearat), Nukleiermittel, Stabilisatoren (beispielsweise Phosphit-basierte stabilisatoren, sterisch gehinderte Phenole), Antistatika (beispielsweise Leitruße, Carbonfasern, Carbon Nanotubes sowie organische Antistatika wie Polyalkylenether, Alkyl-Sulfonate oder Polyamid-haltige Polymere), Säuren, Füll- und Verstärkungsstoffe (beispielsweise Glas- oder Karbonfasern, Glimmer, Kaolin, Talk, CaCO₃ und Glasschuppen) sowie Farbstoffe und Pigmente enthalten.

Die fluorierten Polyolefine können in einer Ausführungsform in Form einer koagulierten Mischung von Emulsionen fluorierter Polyolefine mit Emulsionen eines Vinyl(Co)Polymerisats , bevorzugt mit Emulsionen eines Copolymerisats auf Styrol-Acrylnitril-Basis eingesetzt werden.

In einer bevorzugten Ausführungsform werden lediglich Entformer, Stabilisatoren und Antidrippingmittel zugesetzt, besonders bevorzugt Pentaerythrittetrastearat, Irganox B900, ein weiterer Phosphitstabilisator und PTFE-Pulver.

### Herstellung der Formmassen und Formkörper

Die erfindungsgemäßen thermoplastischen Formmassen werden hergestellt, indem man die jeweiligen Bestandteile in bekannter Weise vermischt und bei Temperaturen von 260°C bis 300°C in üblichen Aggregaten wie Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Gegenstand der Erfindung sind ebenfalls Verfahren zur Herstellung der Formmassen und die Verwendung der Formmassen zur Herstellung von Formkörpern sowie die Formteile selbst.

Die erfindungsgemäßen Formmassen können zur Herstellung von Formkörpern jeder Art verwendet werden. Diese können durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formkörper sind Folien, Profile, Gehäuseteile jeder Art, z.B. für Haushaltsgeräte wie Fernsehgeräte, Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker, Steckdosen und Installationsgehäuse, sowie Karosserie- bzw. Innenbauteile für Nutzfahrzeuge, insbesondere für den Automobilbereich.

Insbesondere können die erfindungsgemäßen Formmassen beispielsweise auch zur Herstellung von folgenden Formkörpern oder Formteilen verwendet werden: Innenausbauteile für Schienenfahrzeuge, Schiffe, Flugzeuge, Busse und andere Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen und für Fernsehgeräte, wärmeisolierte Transportbehältnisse, Formteile für Sanitär- und Badausrüstungen, Abdeckgitter für Lüfteröffnungen und Gehäuse für Gartengeräte.

Die folgenden Beispiele dienen der weiteren Erläuterung der Erfindung.

### Beispiele

### Komponente A:

Lineares Polycarbonat auf Basis Bisphenol A mit einer relativen Lösungsviskosität von ηᵣₑₗ = 1,29 ± 0,05 gemessen in CH₂Cl₂ als Lösungsmittel bei 25°C und einer Konzentration von 0,5 g/100 ml.

### Komponente B:

Lineares Polybutylenterephthalat mit einer Schmelze-Volumenfließrate (MVR) nach ISO 1133 von 14 cm³/10min bei 260°C und 2.16 kg Belastung

### Komponente C:

Calciumphosphinat, mittlere Teilchengröße d₅₀ = 50 µm

### Komponente D:

D-1: Irganox® B900 (Gemisch aus 80 Gew.-% Irgafos® 168 (Tris-(2,4-di-tert.-butyl)phenyl-phosphit) und 20 Gew.-% Irganox® 1076 (Octadecyl-3-(3,5-di-tert-butyl-4-hydroxyphenyl)propionat) (BASF, Deutschland))
D-2: Mischung eines Phosphitstabilisators mit linearem Polybutylenterephthalat
D-3: Entformungsmittel Pentaerythrittetrastearat
D-4: Polytetrafluorethylen-Pulver, z.B. CFP 6000 N, Fa. Du Pont.

### Komponente E:

### Komponente E-1:

ABS-Polymerisat, hergestellt durch Emulsions-Polymerisation von 43 Gew.-% (bezogen auf das ABS-Polymerisat) einer Mischung aus 27 Gew.-% Acrylnitril und 73 Gew.-% Styrol in Gegenwart von 57 Gew.-% (bezogen auf das ABS-Polymerisat) eines teilchenförmig vernetzten Polybutadienkautschuks (mittlerer Teilchendurchmesser d₅₀ = 0,35 µm). Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid-Z. und Z. Polymere 250 (1972), 782-796) bestimmt werden.

### Komponente E-2:

Pfropfpolymerisat aus 15 Gew.-% einer Hülle aus Polymethylmethacrylat auf 85Gew.-% einer Pfropfgrundlage aus einem Silikon-Acrylat-Kompositkautschuk.

### Herstellung und Prüfung der Formmassen

Auf einem Zweischneckenextruder (ZSK-25) (Fa. Werner und Pfleiderer) werden die in Tabelle 1 aufgeführten Einsatzstoffe bei einer Drehzahl von 180 Upm und einem Durchsatz von 17,5 kg/h bei einer Maschinentemperatur von 260°C compoundiert und granuliert.

Die fertigen Granulate werden auf einer Spritzgussmaschine zu den entsprechenden Probekörpern verarbeitet (Massetemperatur 260°C, Werkzeugtemperatur 70°C, Fließfrontgeschwindigkeit 240 mm/s).

Die Charakterisierung erfolgt gemäß:
Die **Wärmeformbeständigkeit** wurde gemessen gemäß DIN ISO 306 (Vicat-Erweichungstemperatur, Verfahren B mit 50 N Belastung und einer Heizrate von 120 K/h) an einem einseitig angespritzten Prüfstab der Dimension 80x10x4 mm.

Das **Brandverhalten** wird nach UL 94V an Stäben der Abmessung 127 x 12,7 x 0,8 mm gemessen.

Die **Verarbeitungs-Schwindung** wird in Anlehnung an ISO 2577 an Platten der Abmessung 150 x 105 x 3 mm bestimmt.

Unter Chemikalienbeständigkeit **(ESC-Verhalten)** wird die Zeit bis zum Bruch bei 2,4 % Randfaserdehnung nach Lagerung des Probekörpers in Dioctylphthalat (DOP) bei Raumtemperatur an einem einseitig angespritzten Prüfstab der Dimension 80x10x4 mm angegeben.

Die **Teilchengröße** (d₅₀) wird mit Sedigraph nach ISO 13317-3 bestimmt.

**Tabelle 1: Zusammensetzungen und ihre Eigenschaften**

| | **Bsp. 1** | **Vgl.1** | **Vgl.2** | **Vgl. 3** | **Bsp.2** | **Vgl. 4** | **Bsp.3** | **Bsp. 4** | **Vgl.5** | **Vgl.6** |
|---|---|---|---|---|---|---|---|---|---|---|
| A | 53 | 45 | 42 | 67 | 61 | 59 | 49 | 56 | 47 | 47 |
| B | 31 | 39 | 42 | 17 | 23 | 34 | 29 | 32 | 27 | 27 |
| C | 14 | 14 | 14 | 14 | 14 | 5 | 20 | 10 | 14 | 14 |
| D-1 | 0,2 | 0,2 | 0,2 | 0,2 | 0,2 | 0,2 | 0,2 | 0,2 | 0,2 | 0,2 |
| D-2 | 0,8 | 0,8 | 0,8 | 0,8 | 0,8 | 0,8 | 0,8 | 0,8 | 0,8 | 0,8 |
| D-3 | 0,6 | 0,6 | 0,6 | 0,6 | 0,6 | 0,6 | 0,6 | 0,6 | 0,6 | 0,6 |
| D-4 | 0,4 | 0,4 | 0,4 | 0,4 | 0,4 | 0,4 | 0,4 | 0,4 | 0,4 | 0,4 |
| E-1 | | | | | | | | | 10 | |
| E-2 | | | | | | | | | | 10 |
| Verhältnis A:B | 1,71 | 1,15 | 1,00 | 3,94 | 2,65 | 1,73 | 1,69 | 1,75 | 1,74 | 1,74 |
| ESC DOP Zeit bis Bruch (2.4%) [hhh:mm] | 168 | 168 | 168 | 000:14 | 168 | 168 | 168 | 168 | 168 | 168 |
| Verarbeitungschwindung quer [%] | 0,58 | 0,73 | 0,79 | 0,44 | 0,51 | 0,69 | 0,53 | 0,64 | 0,61 | 0,68 |
| Vicat [°C] | 131 | 135 | 136 | 120 | 124 | 128 | 130 | 129 | 123 | 126 |
| Gesamtnachbrennzeit UL 94V (0,8 mm) ∑ 2 und 7 Tage Lagerung [s] | 59 | 72 | 130 | 29 | 30 | 325 | 34 | 107 | 369 | 97 |
| UL 94V (0,8 mm) [Klasse] | V0 | V0 | V1 | V0 | V0 | n.b. | V0 | V1 | n.b. | V1 |

Aus Tabelle 1 ist ersichtlich, dass nur die erfindungsgemäßen Zusammensetzungen in den Beispielen 1, 2, 3 und 4 mit einer Kombination aus Polycarbonat, Polyester und Calciumphosphinat in den die erfindungsgemäße Mengen dieAufgabe lösen, d.h. eine Kombination aus aus geringer Verarbeitungsschwindung, hoher Chemikalienbeständigkeit und guter Wärmeformbeständigkeit, bei gleichzeitig gutem Brandvetalten.

## Patentansprüche

1. Zusammensetzung enthaltend
A) 49 bis 70 Gew.-Teile aromatisches Polycarbonat,
B) 21 bis 40 Gew.-Teile Polyalkylenterephthalat mit mehr als 2 Kohlenstoffen in der Diolkomponente,
C) 6 bis 25 Gew.-Teile eines Salzes einer Phosphinsäure.
D) 0 bis 24 Gew.-Teile übliche Additive,
wobei alle Gewichtsteilangaben in der vorliegenden Anmeldung so normiert sind, dass die Summe der Gewichtsteile der Komponenten A+B+C+D in der Zusammensetzung 100 ergeben.

2. Zusammensetzung gemäß Anspruch 1, **dadurch gekennzeichnet, daß** der Quotient von Komponente A) zu B) vorzugsweise im Bereich von 1,4 bis 3,5 ist.

3. Zusammensetzung gemäß Anspruch 1, **dadurch gekennzeichnet, daß** der Quotient von Komponente A) zu B) vorzugsweise im Bereich von 1,6 bis 2,7 ist.

4. Zusammensetzung nach einem der vorhergehenden Ansprüche, enthaltend 53 bis 61 Gew.-Teile aromatisches Polycarbonat Komponente A).

5. Zusammensetzung nach einem der vorhergehenden Ansprüche, enthaltend 25 bis 33 Gew.-Teile Polyalkylenterephthalat mit mehr als 2 Kohlenstoffen in der Diolkomponente gemäß Komponente B).

6. Zusammensetzung nach einem der vorhergehenden Ansprüche, enthaltend 7 bis 22 Gew.-Teile eines Salzes einer Phosphinsäure gemäß Komponente C).

7. Zusammensetzung nach einem der vorhergehenden Ansprüche, enthaltend 10 bis 20 Gew.-Teile eines Salzes einer Phosphinsäure gemäß Komponente C).

8. Zusammensetzung nach einem der vorhergehenden Ansprüche, enthaltend 0 bis 50 Gew.-Teile übliche Additive gemäß Komponente D).

9. Zusammensetzung nach einem der vorhergehenden Ansprüche, **dadurch gekennzeichnet, daß** Komponente B Polybutylenterephthalat ist.

10. Zusammensetzung nach einem der vorhergehenden Ansprüche, enthaltend als Komponente D) ein Salz oder eine Mischung von Salzen einer Phosphinsäure der Formel (IV) eingesetzt wird, 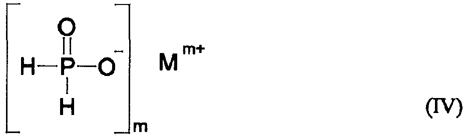 worin
M^{m+} ein Metallkation der 1. Hauptgruppe (Alkalimetalle; m = 1), 2. Hauptgruppe (Erdalkalimetalle; m = 2) oder der 3. Hauptgruppe (m = 3) oder der 2., 7. oder 8. Nebengruppe (wobei m eine ganze Zahl von 1 bis 6, bedeutet) des Periodensystems ist.
ein Salz oder eine Mischung von Salzen einer Phosphinsäure, wobei das Metallkation Li⁺, Na⁺, K⁺, Mg²⁺, Ca²⁺, Sr²⁺, Ba²⁺, Al³⁺, Zn²⁺, Mn²⁺, Fe²⁺ und/oder Fe³⁺ ist.

11. Zusammensetzung gemäß Anspruch 10, **dadurch gekennzeichnet, daß** das Metallkation Li⁺, Na⁺, K⁺, Mg²⁺, Ca²⁺, Sr²⁺, Ba²⁺, Al³⁺, Zn²⁺, Mn²⁺, Fe²⁺ und/oder Fe³⁺ ist.

12. Zusammensetzung gemäß Anspruch 11 wobei M^{m+} = Ca²⁺ und m = 2 ist.

13. Zusammensetzung gemäß einem der Ansprüche 1 bis 12, wobei die mittlere Teilchengröße d₅₀ des Phosphinsäuresalzes (Komponente C) kleiner als 80 □m ist.

14. Zusammensetzung gemäß einem der Ansprüche 1 bis 14, wobei die Zusammensetzung frei ist von kautschukbasierten Pfropfpolymeren und kautschukfreien Vinyl(Co)polymerisaten.

15. Verwendung der Zusammensetzungen gemäß Anspruch 1 bis 14 zur Herstellung von Formkörpern.

## Claims

1. A composition containing
A) 49 to 70 parts by weight aromatic polycarbonate,
B) 21 to 40 parts by weight polyalkylene terephthalate with more than 2 carbons in the diol component,
C) 6 to 25 parts by weight of a salt of a phosphinic acid.
D) 0 to 24 parts by weight conventional additives,
all parts by weight in the present application being standardised such that the sum of the parts by weight of components A+B+C+D in the composition adds up to 100.

2. The composition according to claim 1, **characterised in that** the quotient of component A) to B) is preferably in the range of 1.4 to 3.5.

3. The composition according to claim 1, **characterised in that** the quotient of component A) to B) is preferably in the range of 1.6 to 2.7.

4. The composition according to one of the preceding claims, containing 53 to 61 parts by weight aromatic polycarbonate component A).

5. The composition according to one of the preceding claims, containing 25 to 33 parts by weight polyalkylene terephthalate with more than 2 carbons in the diol component according to component B).

6. The composition according to one of the preceding claims, containing 7 to 22 parts by weight of a salt of a phosphinic acid according to component C).

7. The composition according to one of the preceding claims, containing 10 to 20 parts by weight of a salt of a phosphinic acid according to component C).

8. The composition according to one of the preceding claims, containing 0 to 50 parts by weight conventional additives according to component D).

9. The composition according to one of the preceding claims, **characterised in that** component B is polybutylene terephthalate.

10. The composition according to one of the preceding claims, containing as component D) a salt or a mixture of salts of a phosphinic acid of formula (IV) is used, 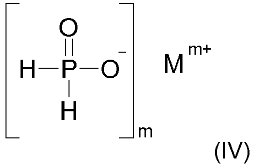 where
M^{m+} is a metal cation of main group 1 (alkali metals; m = 1), main group 2 (alkaline earth metals; m = 2) or main group 3 (m = 3) or subgroup 2, 7 or 8 (wherein m signifies an integer from 1 to 6) of the periodic table.
a salt or a mixture of salts of a phosphinic acid, wherein the metal cation is Li⁺, Na⁺, K⁺, Mg²⁺, Ca²⁺, Sr²⁺, Ba²⁺, Al³⁺, Zn²⁺, Mn²⁺, Fe²⁺ and/or Fe³⁺.

11. The composition according to claim 10, **characterised in that** the metal cation is Li⁺, Na⁺, K⁺, Mg²⁺, Ca²⁺, Sr²⁺, Ba²⁺, Al³⁺, Zn²⁺, Mn²⁺, Fe²⁺ and/or Fe³⁺.

12. The composition according to claim 11 wherein M^{m+} = Ca²⁺ and m = 2.

13. The composition according to one of claims 1 to 12, wherein the average particle size d₅₀ of the phosphinic acid salt (component C) is less than 80 □m.

14. The composition according to one of claims 1 to 14, wherein the composition is free from rubber-based graft polymers and rubber-free vinyl (co)polymers.

15. Use of the compositions according to claims 1 to 14 for the production of mouldings.

## Revendications

1. Composition contenant
A) 49 à 70 parties en poids d'un polycarbonate aromatique,
B) 21 à 40 parties en poids d'un polyalkylène téréphtalate contenant plus de 2 carbones dans le composant diol,
C) 6 à 25 parties en poids d'un sel d'un acide phosphinique,
D) 0 à 24 parties en poids d'additifs usuels,
toutes les données de parties en poids dans la présente demande étant normées de sorte que la somme des parties en poids des composants A + B + C + D dans la composition soit de 100.

2. Composition selon la revendication 1, **caractérisée en ce que** le quotient du composant A) sur B) est de préférence dans la plage allant de 1,4 à 3,5.

3. Composition selon la revendication 1, **caractérisée en ce que** le quotient du composant A) sur B) est de préférence dans la plage allant de 1,6 à 2,7.

4. Composition selon l'une quelconque des revendications précédentes, contenant 53 à 61 parties en poids du composant A) polycarbonate aromatique.

5. Composition selon l'une quelconque des revendications précédentes, contenant 25 à 33 parties en poids d'un polyalkylène téréphtalate contenant plus de 2 carbones dans le composant diol selon le composant B).

6. Composition selon l'une quelconque des revendications précédentes, contenant 7 à 22 parties en poids d'un sel d'un acide phosphinique selon le composant C).

7. Composition selon l'une quelconque des revendications précédentes, contenant 10 à 20 parties en poids d'un sel d'un acide phosphinique selon le composant C).

8. Composition selon l'une quelconque des revendications précédentes, contenant 0 à 50 parties en poids d'additifs usuels selon le composant D).

9. Composition selon l'une quelconque des revendications précédentes, **caractérisée en ce que** le composant B est le polybutylène téréphtalate.

10. Composition selon l'une quelconque des revendications précédentes, contenant en tant que composant D) un sel ou un mélange de sels d'un acide phosphinique de formule (IV) est utilisé 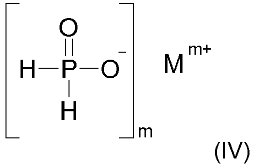 dans laquelle
M^{m+} est un cation métallique du groupe principal 1 (métaux alcalins ; m = 1), du groupe principal 2 (métaux alcalino-terreux ; m = 2) ou du groupe principal 3 (m = 3) ou du groupe de transition 2, 7 ou 8 (m signifiant un nombre entier de 1 à 6) du tableau périodique.
un sel ou un mélange de sels d'un acide phosphinique, le cation métallique étant Li⁺, Na⁺, K⁺, Mg²⁺, Ca²⁺, Sr²⁺, Ba²⁺, Al³⁺, Zn²⁺, Mn²⁺, Fe²⁺ et/ou Fe³⁺.

11. Composition selon la revendication 10, **caractérisée en ce que** le cation métallique est Li⁺, Na⁺, K⁺, Mg²⁺, Ca²⁺, Sr²⁺, Ba²⁺, Al³⁺, Zn²⁺, Mn²⁺, Fe²⁺ et/ou Fe³⁺.

12. Composition selon la revendication 11, dans laquelle M^{m+} = Ca²⁺ et m = 2.

13. Composition selon l'une quelconque des revendications 1 à 12, dans laquelle la taille de particule moyenne d₅₀ du sel d'acide phosphinique (composant C) est inférieure à 80 □m.

14. Composition selon l'une quelconque des revendications 1 à 14, dans laquelle la composition est exempte de polymères greffés à base de caoutchouc et de (co)polymères de vinyle sans caoutchouc.

15. Utilisation des compositions selon les revendications 1 à 14 pour la fabrication de corps moulés.
